# EUROPÄISCHE PATENTANMELDUNG

(11) **EP 3 699 067 A1**
(43) Veröffentlichungstag der Anmeldung: **26.08.2020**
(21) Anmeldenummer: 20157035.5
(22) Anmeldetag: 12.02.2020
(51) Int. Cl.: B62D 53/00, B62D 63/06

(54) **ROUTENZUG**

(30) Priorität: 17.02.2019 DE 102019103949; 18.02.2019 DE 102019104046
(71) Anmelder: A&A Logistik-Equipment GmbH & Co. KG, 21258 Heidenau (DE)
(72) Erfinder: Haltermann, Frank, 21258 Heidenau (DE); Olesen, Timm, 21614 Buxtehude (DE)
(74) Vertreter: Holz, Christian

(57) **Zusammenfassung**

Die vorliegende Erfindung betrifft einen Routenzug (1a) mit einem ersten Routenzugelement (1aa), welches ausgebildet ist, wenigstens ein Logistikelement (2) aufzunehmen, und mit einem zweiten Routenzugelement (1ab), welches ausgebildet ist, wenigstens ein Logistikelement (2) aufzunehmen. Der Routenzug (1a) ist dadurch gekennzeichnet, dass das erste Routenzugelement (1aa) eine Routenzug-Master-Steuerungseinheit (50) aufweist, und dass das zweite Routenzugelement (1ab) eine Routenzug-Slave-Steuerungseinheit (51) aufweist, wobei die Routenzug-Master-Steuerungseinheit (50) des ersten Routenzugelements (1aa) mittels eines Routenzug-Busses (52) signalübertragend mit der Routenzug-Slave-Steuerungseinheit (51) des zweiten Routenzugelements (1ab) verbunden ist.

## Beschreibung

Die vorliegende Erfindung betrifft einen Routenzug gemäß dem Oberbegriff des Patentanspruchs 1, einen Schleppverbund gemäß dem Patentanspruch 13 sowie eine Routenzuganordnung oder einen Schleppverbund gemäß dem Patentanspruch 15.

Das Gebiet der Intralogistik betrifft die Waren- und Materialflüsse innerhalb von Unternehmen. In der Produktion müssen Komponenten und Zwischenprodukte den Fertigungsschritten zugeführt und danach zur Weiterverarbeitung oder Verpackung abgeholt werden. Im Versand sind Lagerwaren für die Versendung zu kommissionieren. Hierfür werden bei größeren Transportmengen und -wegen sogenannte Routenzüge, Trailerzüge oder Logistikzüge eingesetzt, die auch als Routenzuganordnung und zusammen mit einem Zugfahrzeug auch als Schleppverbund bezeichnet werden können. Eine Routenzuganordnung besteht im Allgemeinen aus drei bis vier Routenzugelementen oder Routenzuganhängern. Die Routenzuganordnung kann in Routenzüge unterteilt werden, welche jeweils wenigstens zwei Routenzugelemente aufweisen. Der Fahrer fährt mit seinem Schleppverbund die verschiedenen Stationen im Lager, in der Produktion, im Warenausgang etc. an, hält dort und ent- bzw. belädt die einzelnen Routenzugelemente je nach Auftrag.

Um größere Warenmengen schneller und einfacher be- und entladen zu können, sind Routenzugelemente bekannt, die mit z.B. Paletten oder Gitterboxen beladene Logistikelemente wie z.B. Rollwagen oder Rollgestelle, auch Trolleys genannt, als Ganzes aufnehmen und transportieren können. Zur Aufnahme eines Logistikelements wird das Routenzugelement abgesenkt, das Logistikelement auf eine Aufnahme des Routenzugelements aufgeschoben und das Routenzugelement dann wieder angehoben, damit die Rollen des Logistikelements während der Fahrt mit den Schleppverbund den Untergrund nicht berühren, hierdurch geschont werden und dessen Fahreigenschaften nicht beeinflussen. Die Entnahme eines Logistikelements erfolgt in der umgekehrten Reihenfolge der o.g. Schritte.

Alleine aufgrund ihrer Gestell- bzw. Rahmenform sind verschiedene Arten von Routenzugelementen bekannt. Sehr häufig werden Routenzugelemente mit einem C-förmigen, senkrecht zur Fahrtrichtung einseitig offenem Gestell verwendet, in welches das Logistikelement seitlich von einer Seite eingeschoben und entnommen werden kann. Auch sind Routenzugelemente bekannt, die ein E-förmiges Gestell mit einer Gabel in der Mitte aufweisen. In diesem Fall kann das Logistikelement ebenfalls von einer Seite seitlich zwischen die vordere und hintere Kante des E-Rahmens, aber über dessen mittlere Gabel drüber, in den Rahmen eingeschoben werden. Ferner sind sog. Überladerahmen bekannt, welche, der zuvor beschriebenen Nomenklatur folgend, auch teilweise als B-Rahmen bezeichnet werden. Ein Überladerahmen weist ein Gestell mit einer in Längs- bzw. Fahrtrichtung mittig angeordneten Achse auf, an die sich in Längs- bzw. Fahrtrichtung davor und dahinter jeweils ein flacher Bereich als Logistikelementaufnahme anschließt, auf den ein Logistikelement von beiden Seiten aufgeschoben sowie entnommen werden kann. Des Weiteren sind sog. Portalrahmen bekannt, welche nach unten und zu beiden Seiten hin offen sind. Es sind Ausführungen bekannt, bei denen die Verbindung der in Längs- bzw. Fahrtrichtung vorderen und hinteren Kante des Rahmens, welche jeweils eine Achse mit einem Räderpaar aufweist, über dem Gestell über die Zwischenräume hinüber stattfindet, in welche jeweils ein Logistikelement von beiden Seiten eingeschoben und entnommen werden kann.

Alle diese Arten von Routenzugelementen haben gemeinsam, dass jeweils zwei Räder mit einer starren Achse das Fahrwerk des Routenzugelements bilden, welches üblicherweise in der Fahrtrichtung mittig am Routenzugelement angeordnet ist. Das Gestell des Routenzugelements kann zusammen mit dem aufgenommenen Logistikelement üblicherweise rein vertikal angehoben sowie abgesenkt werden. Die Realisierung dieser Hebefunktionen kann mittels elektrischer Energie oder durch einen hydraulischen oder pneumatischen Druck erfolgen, welcher üblicherweise vom Zugfahrzeug zur Verfügung gestellt wird. Derartige Routenzugelemente sowie korrespondierende Logistikelemente sind z.B. von den Firmen Still, Linde, Jungheinrich, Jung Hebetechnik, LR Intralogistik sowie A&A Logistik-Equipment bekannt.

Die EP 2 161182 A2 beschreibt einen einachsigen Trailerzuganhänger mit einem einseitig geöffneten E-förmigen Rahmen mit einem mittleren Querträger. An dem mittleren Querträger sind zwei Führungsrollen auf einer starren Achse unabhängig voneinander drehbar angeordnet. Der E-förmige Rahmen kann gegenüber der Achse mit den zwei Führungsrollen senkrecht angehoben bzw. abgesenkt werden. Vergleichbare einachsigen Trailerzuganhänger werden auch in der EP 2 311 673 B1, in der EP 2 808 234 A1, in der DE 10 2012 017 838 A1, in der DE 20 2015 104 465 U1 sowie in der E 20 2013 102 199 U1 beschrieben.

Die DE 20 2014 101 510 U1 beschreibt einen Trailerzuganhänger mit einem B-förmigen Traggestell, d.h. mit einem Überladerahmen. Das Traggestell samt zweier Auffahrt- und Ablauframpen kann mittels einer Hubeinrichtung, die zwischen dem Traggestell und der Achse des in der Fahrtrichtung mittig angeordneten Fahrwerks angeordnet ist, rein vertikal angehoben und abgesenkt werden. Die starre Achse des mittig angeordneten Fahrwerks ist quer zur Fahrtrichtung angeordnet und weist an beiden Enden jeweils ein Rad auf.

Die EP 2 818 389 A1 beschreibt einen Portalanhänger für einen Routenzug. Der mittlere Anhängerabschnitt weist ein Paar von Rollen auf, die an einer Drehachse senkrecht zur Anhängerlängsrichtung vorgesehen sind. Die Rollen sind starr an dem mittleren Anhängerabschnitt angeordnet und besitzen miteinander fluchtende Drehachsen. Der mittlere Anhängerabschnitt ist mit einer Hubeinrichtung ausgestattet, die es erlaubt, den mittleren Anhängerabschnitt und über die portalförmigen Bögen auch den vorderen und hinteren Anhängerabschnitt rein vertikal anzuheben.

Die zuvor genannten bekannten Routenzugelemente haben gemeinsam, dass die Routenzugelemente in der Bewegungsrichtung bzw. in der Fahrtrichtung des Schleppverbunds in der Horizontalen starr miteinander verbunden sind. So weist z.B. das Routenzugelement der DE 10 2012 017 838 A1 eine starre Deichsel auf, welche starr an dem Rahmen bzw. an dem Gestell angeordnet ist und sich in der Bewegungsrichtung bzw. Fahrtrichtung des Schleppverbunds horizontal zu einem anderen Routenzugelement oder zum Zugfahrzeug hin erstreckt, um dort in eine Anhängevorrichtung einzugreifen. Hierdurch können zwei Routenzugelemente miteinander verbunden werden, um die Bewegung des Schleppverbunds in dessen Bewegungsrichtung bzw. Fahrtrichtung sowie um gegenüber einander Bewegungen um die vertikale Achse, d.h. um die Hochachse, der Verbindung von Deichsel und Anhängevorrichtung wie z.B. Kurvenfahrten ausführen zu können.

Nachteilig hierbei ist jedoch, dass sich das Absenken bzw. das Anheben eines Routenzugelements eines derartigen Schleppverbunds aufgrund ihrer horizontal starren Kopplung untereinander auch auf die unmittelbar benachbarten beiden Routenzugelemente bzw. auf ein Routenzugelement und das Zugfahrzeug auswirkt. Somit können üblicherweise lediglich Absenkbewegungen bzw. Anhebebewegungen geringer Höhe ausgeführt werden, ohne dass diese Bewegungen durch die starre Kopplung behindert bzw. verhindert werden. Dies kann in dem Maße erfolgen, wie es der Abstand zwischen den Routenzugelementen bzw. dem Routenzugelement und dem Zugfahrzeug sowie das Spiel der Verbindung von Deichsel und Anhängevorrichtung zulassen.

Die DE 10 2011 106 842 A1 betrifft einen Routenzug mit mindestens einem Anhänger, wobei mindestens eine Verbindung zwischen Zugfahrzeug und Anhänger oder eine Verbindung zwischen zwei Anhängern aus zwei sich kreuzenden Lenkern besteht. Die Verbindung mittels zwei sich kreuzender Lenker kann auch als Scherenkopplung bezeichnet werden.

Das Routenzugelement der DE 10 2011 106 842 A1 weist somit ebenfalls eine in der Horizontalen starre Verbindung mit einem weiteren gleichartigen Routenzugelement bzw. mit einem entsprechenden Zugfahrzeug auf. Da eine Scherenkopplung jedoch in der Fahrtrichtung sehr kurz baut, fehlt es dieser starren Verbindung, im Gegensatz zu einer Verbindung von Deichsel und Anhängevorrichtung, an einem ausreichend langen Weg zwischen den beiden Routenzugelementen bzw. zwischen dem Routenzugelement und dem Zugfahrzeug, um über ein Spiel der Kontaktstellen zwischen den Lenkern der Scherenkopplung und dem Routenzugelement bzw. dem Zugfahrzeug Absenkbewegungen bzw. Anhebebewegungen zuzulassen. Auch wirken gleich zwei horizontal starre Verbindungselemente zwischen zwei Routenzugelementen bzw. zwischen dem Routenzugelement und dem Zugfahrzeug. Ferner bewirkt die überkreuzende Anordnung der Lenker der Scherenkopplung eine besonders starre horizontale Verbindung. Somit können Routenzuganordnungen, deren Routenzugelemente mittels Scherenkopplungen miteinander verbunden sind, nur gemeinsam abgesenkt und angehoben werden. Andernfalls wird das Absenken bzw. das Anheben eines Routenzugelements durch das benachbarte Routenzugelement verhindert oder zumindest behindert.

Aufgrund der mechanisch starren Kopplung der Routenzugelemente untereinander und dem hierdurch bedingten gemeinsamen Absenken und Anheben der Routenzuganordnung als Ganzes, d.h. aller Routenzugelemente gemeinsam, kann das gemeinsame Absenken und Anheben seitens einer Steuerungseinheit des Zugfahrzeugs veranlasst werden. Dies kann die Steuerung des Schleppverbunds vereinfachen und insbesondere Steuerungseinheiten der einzelnen Routenzugelemente vermeiden bzw. diese möglichst einfach und damit kostengünstig und bzw. oder platzsparend halten.

Eine Aufgabe der vorliegenden Erfindung ist es, einen Routenzug der eingangs beschriebenen Art bereit zu stellen, so dass die Möglichkeiten der Benutzung verbessert und bzw. oder erweitert werden können. Zumindest soll eine Alternative zu bekannten Lösungen bereitgestellt werden.

Die Aufgabe wird erfindungsgemäß durch einen Routenzug mit den Merkmalen des Patentanspruchs 1, durch einen Schleppverbund mit den Merkmalen des Patentanspruchs 13 sowie durch eine Routenzuganordnung oder durch einen Schleppverbund mit den Merkmalen des Patentanspruchs 15 gelöst. Vorteilhafte Weiterbildungen sind in den Unteransprüchen beschrieben.

Somit betrifft die Erfindung einen Routenzug mit einem ersten Routenzugelement, welches ausgebildet ist, wenigstens ein Logistikelement aufzunehmen, und mit einem zweiten Routenzugelement, welches ausgebildet ist, wenigstens ein Logistikelement aufzunehmen. Die beiden Routenzugelemente können ausgebildet sein, gleiche oder unterschiedliche Logistikelemente wie z.B. Trolleys aufzunehmen. Die beiden Routenzugelemente, welche auch als Routenzuganhänger bezeichnet werden können, können jeweils einen C-Rahmen oder einen E-Rahmen aufweisen und lediglich von einer Seite zu be- und entladen sein. Die beiden Routenzugelemente können aber auch ein B-Rahmen bzw. ein Überladerahmen oder ein Portalrahmen aufweisen und von beiden Seiten zu be- und entladen sein.

Zwei miteinander verbundene Routenzugelemente können als Routenzug bezeichnet werden, wobei ein Routenzug auch mehr als zwei Routenzugelemente aufweisen kann. Unter einer Routenzuganordnung sind wenigstens zwei oder mehr miteinander verbundene Routenzugelemente zu verstehen. Eine Routenzuganordnung kann insbesondere mehrere Routenzüge mit jeweils wenigstens zwei Routenzugelementen aufweisen. Wird wenigstens ein Routenzugelement, wenigstens ein Routenzug oder eine Routenzuganordnung mit einem Zugfahrzeug verbunden, so kann hierdurch ein Schleppverbund gebildet werden.

Der erfindungsgemäße Routenzug ist dadurch gekennzeichnet, dass das erste Routenzugelement eine Routenzug-Master-Steuerungseinheit aufweist und dass das zweite Routenzugelement eine Routenzug-Slave-Steuerungseinheit aufweist, wobei die Routenzug-Master-Steuerungseinheit des ersten Routenzugelements mittels eines Routenzug-Busses signalübertragend mit der Routenzug-Slave-Steuerungseinheit des zweiten Routenzugelements verbunden ist. Die Signalübertragung kann über Kabel, kabellos sowie aus einer Kombination hiervon erfolgen. Die Umsetzung der jeweiligen Steuerungseinheit kann vorzugsweise über eine Speicherprogrammierbare Steuerung (SPS) erfolgen.

Unter einer Routenzug-Master-Steuerungseinheit ist eine Steuerungseinheit zu verstehen, welche der Routenzug-Slave-Steuerungseinheit übergeordnet ist, mehr Datenverarbeitungsmöglichkeiten als die Routenzug-Slave-Steuerungseinheit aufweist und bzw. oder die Funktionen und insbesondere die Handlungen beider Steuerungseinheiten kontrollieren und bzw. oder koordinieren kann.

Mittels der Verwendung einer Routenzug-Master-Steuerungseinheit und wenigstens einer Routenzug-Slave-Steuerungseinheit innerhalb eines Routenzugs kann eine hierarchische Verwaltung der Routenzugelemente des Routenzugs geschaffen werden. Durch die Verwendung derartiger Steuerungseinheiten können die Möglichkeiten der Routenzugelemente gegenüber bekannten Routenzugelementen gesteigert werden, welche üblicherweise zentral vom Zugfahrzeug aus gesteuert und veranlasst werden bzw. aus einfachen Funktionen wie einem vertikalen Absenken und Anheben bestehen. Erfindungsgemäß können somit weitere Funktionen der Routenzugelemente ermöglicht bzw. deren Umsetzung vereinfacht sowie flexibler gestaltet werden, wie weiter unten noch näher beschrieben werden wird. Dies kann die Möglichkeiten der Benutzung von Routenzügen verbessern und bzw. oder erweitern. Auch kann dies die Eingabemöglichkeiten für einen Benutzer gegenüber einem Routenzugelement und bzw. oder die Ausgabemöglichkeiten eines Routenzugelements gegenüber einem Benutzer erhöhten und jeweils insbesondere komplexer und umfangsreicher gestalten, wie weiter unten noch näher beschrieben werden wird. Insbesondere kundenspezifische Lösungen können auf diese Art und Weise überhaupt bzw. einfacher als bisher bekannt umgesetzt werden.

Hierbei die Steuerungseinheiten als Master und Slave zusammenarbeiten zu lassen kann die Umsetzung der zuvor beschriebenen Möglichkeiten vereinfachen, da die Routenzug-Slave-Steuerungseinheit des zweiten Routenzugelements aufgrund ihres geringeren Funktionsumfangs einfacher, platzsparender und bzw. oder kostengünstiger als die Routenzug-Master-Steuerungseinheit ausgebildet sein kann, welche zentrale Berechnung etc. für den gesamten Routenzug übernehmen und die Funktionen für das eigene Routenzugelement direkt umsetzen sowie mittels der Routenzug-Slave-Steuerungseinheit für das zweite Routenzugelement z.B. mittels Anweisung veranlassen kann. Hierdurch können die zuvor erwähnten Funktionen ebenso wie Eingaben und bzw. oder Ausgaben trotz gesteigertem Umfang mit einem vergleichsweise einfachen zusätzlichen Aufwand umgesetzt werden.

Mit anderen Worten kann der Verbund zweier Routenzugelemente als Routenzug steuerungsseitig als eine Einheit gesehen werden. Alle Funktionen des Routenzugs können über die beiden Steuerungseinheiten umgesetzt werden. Die Sensorik und die Aktuatoren der beiden Routenzugelemente können hierzu an die jeweilige Steuerungseinheit angebunden werden. Die Koordination innerhalb des Routenzugs kann durch die Routenzug-Master-Steuerungseinheit erfolgen.

Gemäß einem Aspekt der Erfindung ist die Routenzug-Master-Steuerungseinheit des ersten Routenzugelements ausgebildet, zumindest eine Funktion des ersten Routenzugelements zu veranlassen, und die Routenzug-Slave-Steuerungseinheit des zweiten Routenzugelements ist ausgebildet, zumindest eine Funktion des zweiten Routenzugelements zu veranlassen, wobei die Routenzug-Master-Steuerungseinheit des ersten Routenzugelements ferner ausgebildet ist, eine Funktion des zweiten Routenzugelements mittels dessen Routenzug-Slave-Steuerungseinheit zu veranlassen.

Wie bereits zuvor erwähnt kann eine Funktion eines Routenzugselements z.B. ein Absenken oder ein Anheben sein aber auch eine Ausgabe, wie weiter unten noch näher beschrieben werden wird. Unter einem Veranlassen kann sowohl das Ausführen einer Funktion als auch das Erteilen einer entsprechenden Anweisung verstanden werden. Mit anderen Worten kann z.B. die Routenzug-Master-Steuerungseinheit ein Absenken ihres Routenzugelements dadurch veranlassen, dass wenigstens ein elektrischer Antrieb bzw. zwei elektrische Antriebe direkt oder indirekt angesteuert werden. Das Veranlassen des Absenkens des zweiten Routenzugelements kann seitens der Routenzug-Master-Steuerungseinheit durch eine entsprechende Anweisung über den Routenzug-Bus an die Routenzug-Slave-Steuerungseinheit erfolgen, welche dann ihrerseits wenigstens einen elektrischen Antrieb bzw. zwei elektrische Antriebe direkt oder indirekt ansteuern kann. Dies kann entsprechend z.B. für eine Ausgabe gelten, wie weiter unten näher beschrieben werden wird.

Gemäß einem weiteren Aspekt der Erfindung sind die Routenzugelemente jeweils ausgebildet, auf wenigstens einer Seite der Querrichtung in der vertikalen Richtung unabhängig von der in Querrichtung gegenüberliegenden Seite abgesenkt und angehoben zu werden, wobei die Routenzug-Master-Steuerungseinheit des ersten Routenzugelements ausgebildet ist, das einseitige und bzw. oder das beidseitige Absenken und Anheben des ersten Routenzugelements zu veranlassen, wobei die Routenzug-Master-Steuerungseinheit des ersten Routenzugelements ferner ausgebildet ist, das einseitige und bzw. oder das beidseitige Absenken und Anheben des zweiten Routenzugelements mittels dessen Routenzug-Slave-Steuerungseinheit zu veranlassen.

Somit kann der Routenzug als Ganzes lediglich einseitig abgesenkt und angehoben werden, wie es beispielsweise aus der DE 10 2016 121 095 A1 bekannt ist. So ist das Routenzugelement der DE 10 2016 121095 A1 bzw. dessen Rahmen ausgebildet, auf wenigstens einer Seite in der vertikalen Richtung unabhängig von der in der Querrichtung gegenüberliegenden Seite abgesenkt und angehoben zu werden. Unter einer Seite ist entweder die rechte oder die linke Seite des Routenzugelements in der Querrichtung zu verstehen.

Auf diese Weise ist es möglich, ein mit einem Logistikelement beladenes Routenzugelement nicht vollständig, d.h. mit seiner gesamten Fläche, sondern lediglich einseitig abzusenken. Auf diese Weise kann innerhalb des Routenzugelements eine schiefe Ebene geschaffen werden, von der das Logistikelement selbsttätig herunterrollen oder zumindest mit weniger Kraftaufwand eines Benutzers heruntergerollt werden kann als von einer horizontalen Ebene eines vollständig abgesenkten Routenzugelements. Dies kann den Benutzer bei der Entladung des Routenzugelements, insbesondere über die Dauer eines Arbeitstages zur Bedienung einer Routenzuganordnung bzw. eines Schleppverbunds mit mehreren Routenzugelementen, signifikant entlasten. Dies kann einer Erschöpfung sowie gesundheitlichen Problemen des Benutzers vorbeugen.

Auch können die beiden Routenzugelemente des Routenzugs unabhängig voneinander lediglich einseitig abgesenkt und angehoben werden. Dies kann auch gegensinnig erfolgen, d.h. ein Routenzugelement kann zu einer Seite und das andere Routenzugelement zu der gegenüberliegende Seite abgesenkt oder angehoben werden. Auch das Absenken und Anheben beider Seite in einem unterschiedlichen Maße erfolgen. Das Absenken erfolgt dabei vorzugsweise einseitig bis auf einen Untergrund, so dass das aufgenommene Logistikelement ebenerdig bzw. stufenlos entnommen werden kann. Des Weiteren können die beiden Routenzugelemente des Routenzugs unabhängig voneinander vollständig abgesenkt und angehoben werden. Dies kann somit nacheinander erfolgen, so dass seitens eines Zugfahrzeugs gleichzeitig lediglich elektrische Energie für ein Routenzugelement zur Verfügung gestellt werden muss; dies kann Spannungsspitzen der Batterie des Zugfahrzeugs abschwächen.

Dabei können sich die erweiterten Möglichkeiten der Steuerung der einzelnen Routenzugelemente eines Routenzugs gemäß der vorliegenden Erfindung besonders vorteilhaft auf die Möglichkeiten des einseitigen Absenkens und Anhebens bei dem Routenzug der DE 10 2016 121095 A1 auswirken, da die Möglichkeiten der Bewegungen beider Seiten beider Routenzugelemente vielfältiger und insbesondere anwendungs- sowie kundenspezifischer als bisher bekannt genutzt werden können. Somit können die Eigenschaften und Vorteile der vorliegenden Erfindung gerade bei einem Routenzug der DE 10 2016 121095 A1 besonders gut zur Geltung kommen.

Gemäß einem weiteren Aspekt der Erfindung sind die Routenzugelemente starr gekoppelt miteinander verbunden, wobei die Routenzug-Master-Steuerungseinheit des ersten Routenzugelements ausgebildet ist, das einseitige und bzw. oder beidseitige Absenken und Anheben des ersten Routenzugelements gemeinsam mit dem einseitigen und bzw. oder beidseitigen Absenken und Anheben des zweiten Routenzugelements mittels dessen Routenzug-Slave-Steuerungseinheit zu veranlassen.

Zwischen den Routenzugelementen des Routenzugs eine starre Kopplung wie z.B. eine Deichsel oder eine Scherenkopplung vorzusehen kann den Aufwand und die Kosten der Kopplung reduzieren. Das einseitige Absenken und Anheben beider Routenzugelemente gemeinsam kann durch die Routenzug-Master-Steuerungseinheit zeitlich koordiniert werden, um eine gegenseitige Blockade und dergleichen der beiden Routenzugelemente untereinander bei der Bewegung zu verhindern.

Gemäß einem weiteren Aspekt der Erfindung sind die Routenzugelemente mittels einer starren Scherenkopplung starr gekoppelt miteinander verbunden. Dies kann insbesondere mittels einer starren Scherenkopplung erfolgen, wie es beispielsweise aus der DE 10 2011 106 842 A1 bekannt ist. Hierdurch können die Vorteile einer Scherenkopplung wie z.B. die Verkürzung der Länge des Routenzugs in der Bewegungs- bzw. Fahrtrichtung gegenüber z.B. Deichseln auf einen erfindungsgemäßen Routenzug übertragen und dort genutzt werden.

Gemäß einem weiteren Aspekt der Erfindung weist das erste Routenzugelement ein Bedienelement auf, welches ausgebildet ist, eine Eingabe einer Person zu erhalten, und bzw. oder das zweite Routenzugelement weist ein Bedienelement auf, welches ausgebildet ist, eine Eingabe einer Person zu erhalten. Das Bedienelement kann ausgebildet sein, eine Eingabe einer Person bzw. eines Benutzers zur Bedienung des Routenzugselements, des Routenzugs sowie einer Routenzuganordnung oder eines Schleppverbunds, wie weiter unten noch näher beschrieben werden wird, zu ermöglichen. Diese Eingabe kann eine Anweisung zur Ausführung einer Funktion wie z.B. ein Absenken oder ein Anheben sein. Zu diesem Zweck kann das Bedienelement z.B. ein Taster und insbesondere ein Fußtaster sein, welcher ausgebildet und angeordnet ist, um vom Benutzer von einer Seite, insbesondere aus der Querrichtung seitlich, oder in der vertikalen Richtung von Oben gedrückt zu werden. Dies kann die Erreichbarkeit und bzw. oder die Bedienbarkeit des Bedienelements für den Benutzer vereinfachen.

Es können auch mehrere Taster oder dergleichen zum Auslösen unterschiedlicher Funktionen wie z.B. ein vollständiges Absenken der dem Benutzer zugewandten Seite ohne Absenken der in der Querrichtung gegenüberliegenden Seite zum Erreichen einer möglichst steilen schiefen Ebene bei vergleichsweise leichtem aufgenommenen Logistikelement, ein vollständiges Absenken der dem Benutzer zugewandten Seite mit teilweisem, z.B. hälftigem, Absenken der in der Querrichtung gegenüberliegenden Seite zum Erreichen einer schiefen Ebene mit geringerer Neigung bei vergleichsweise schwerem aufgenommenen Logistikelement, ein Anheben mit anschließendem erneutem Absenken der dem Benutzer zugewandten Seite bei nun gelöstem Sicherungselement, wie weiter unten noch näher beschrieben werden wird, und dergleichen. Diese Funktionen können z.B. auch durch die Anzahl der Bedienvorgänge wie z.B. durch die Anzahl der Drückvorgänge eines einzigen Tasters ausgelöst und voneinander unterschieden werden.

Die Eingabe kann auch eine Information wie z.B. eine Identifikation eines aufgenommenen Logistikelements sein, welche z.B. über ein Eingabefeld mit Tasten oder über einen sog. Touchscreen als Bedienelement von einem Bediener mit den Fingern eingegeben werden kann. Auch kann als Bedienelement ein Mikrophon verwendet werden, so dass die Eingabe der Person als Spracheingabe erfolgen kann. Ferner kann eine Bilderfassungseinheit wie z.B. eine Kamera als Bedienelement verwendet werden, um eine Gestenerkennung einer Person zur Eingabe zu verwenden. Dies kann jeweils den Umfang der Informationen erhöhen, welche vom Benutzer an das Routenzugelement übergeben werden können. Dies kann insbesondere durch eine Spracheingabe erreicht werden. In jedem Fall kann hierdurch der Funktionsumfang zwischen dem Benutzer und dem Routenzug erhöht werden.

Gemäß einem weiteren Aspekt der Erfindung ist die Routenzug-Master-Steuerungseinheit des ersten Routenzugelements ausgebildet, zumindest eine Funktion des ersten Routenzugelements in Reaktion auf eine Eingabe einer Person mittels des Bedienelements des ersten Routenzugelements und bzw. oder mittels des Bedienelements des zweiten Routenzugelements zu veranlassen. Hierdurch können Funktionen wie z.B. zuvor beschrieben umgesetzt werden, welche lediglich das erste Routenzugelement betreffen. Dabei kann die Bedienung an jedem der beiden Routenzugelemente erfolgen, was die Flexibilität der Bedienung für den Benutzer erhöhen kann.

Gemäß einem weiteren Aspekt der Erfindung ist die Routenzug-Master-Steuerungseinheit des ersten Routenzugelements ausgebildet, zumindest eine Funktion des zweiten Routenzugelements mittels dessen Routenzug-Slave-Steuerungseinheit in Reaktion auf eine Eingabe einer Person mittels des Bedienelements des ersten Routenzugelements und bzw. oder mittels des Bedienelements des zweiten Routenzugelements zu veranlassen. Hierdurch können Funktionen wie z.B. zuvor beschrieben umgesetzt werden, welche lediglich das zweite Routenzugelement betreffen. Dabei kann die Bedienung an jedem der beiden Routenzugelemente erfolgen, was die Flexibilität der Bedienung für den Benutzer erhöhen kann.

Gemäß einem weiteren Aspekt der Erfindung weist das erste Routenzugelement ein Sicherungselement auf, welches ausgebildet ist, ein von dem ersten Routenzugelement aufgenommenes Logistikelement in der Querrichtung zu halten, wobei die Routenzug-Master-Steuerungseinheit des ersten Routenzugelements ausgebildet ist, den Halt des aufgenommenen Logistikelements mittels des Sicherungselements des ersten Routenzugelements zu bewirken oder aufzuheben, und bzw. oder dass das zweite Routenzugelement ein Sicherungselement aufweist, welches ausgebildet ist, ein von dem zweiten Routenzugelement aufgenommenes Logistikelement in der Querrichtung zu halten, wobei die Routenzug-Master-Steuerungseinheit des ersten Routenzugelements ausgebildet ist, den Halt des aufgenommenen Logistikelements mittels des Sicherungselements des zweiten Routenzugelements mittels dessen Routenzug-Slave-Steuerungseinheit zu bewirken oder aufzuheben.

Das Sicherungselement kann ein mechanisches Element sein, welches mittels eines formschlüssigen und bzw. oder kraftschlüssigen Halts das jeweilige aufgenommene Logistikelement in der Querrichtung halten kann. Das Halten und Lösen kann beispielsweise durch ein Ausfahren bzw. Einfahren des Sicherungselements in der vertikalen Richtung, in der Querrichtung und bzw. oder in der Längsrichtung des jeweiligen Routenzugelements mittels eines elektrischen Antriebs erfolgen. Das Betätigen eines Sicherungselements kann durch die jeweilige Steuerungseinheit direkt oder indirekt erfolgen bzw. veranlasst werden, wie bereits zuvor für die Funktionen der Routenzugelemente beschrieben.

Gemäß einem weiteren Aspekt der Erfindung ist bzw. sind das Sicherungselement des ersten Routenzugelements und bzw. oder das Sicherungselement des zweiten Routenzugelements ausgebildet, durch eine zumindest im Wesentlichen vertikale Bewegung die Beweglichkeit des aufgenommenen Logistikelements in der Querrichtung freizugeben oder zu blockieren. Dies kann eine vergleichsweise einfache, kompakte und sichere Möglichkeit darstellen, einen derartigen Halt zu erreichen, da das Sicherungselement hierzu z.B. aus einem Rahmen des jeweiligen Routenzugelements in der vertikalen Richtung heraus bzw. in diesen hinein verfahren werden kann.

Gemäß einem weiteren Aspekt der Erfindung weist das erste Routenzugelement ein Paar in der Querrichtung versetzter Sicherungselemente auf, welches ausgebildet ist, das aufgenommene Logistikelement in der Querrichtung beidseitig zu halten, und bzw. oder das zweite Routenzugelement weist ein Paar in der Querrichtung versetzter Sicherungselemente auf, welches ausgebildet ist, ein aufgenommenes Logistikelement in der Querrichtung beidseitig zu halten. Hierdurch können die zuvor beschriebenen Funktionen und deren Eigenschaften und Vorteile in der Querrichtung in beide Richtungen genutzt werden, so dass die Aufnahme von Logistikelementen wie zuvor beschrieben in beide Richtungen gesichert sowie freigegeben werden kann.

Gemäß einem weiteren Aspekt der Erfindung weist das erste Routenzugelement ein Anzeigeelement auf, welches ausgebildet ist, einer Person wenigstens eine Information anzuzeigen, wobei die Routenzug-Master-Steuerungseinheit des ersten Routenzugelements ausgebildet ist, das Anzeigen des Anzeigeelements des ersten Routenzugelements zu veranlassen, und bzw. oder das zweite Routenzugelement weist ein Anzeigeelement auf, welches ausgebildet ist, einer Person wenigstens eine Information anzuzeigen, wobei die Routenzug-Master-Steuerungseinheit des ersten Routenzugelements ausgebildet ist, das Anzeigen des Anzeigeelements des zweiten Routenzugelements mittels dessen Routenzug-Slave-Steuerungseinheit zu veranlassen. Auf diese Art und Weise können Informationen seitens des Routenzugs dem Benutzer optisch angezeigt und hierzu die erfindungsgemäße hierarchische Steuerung genutzt werden.

Als einfache, kompakte und bzw. oder kostengünstige Umsetzung kann z.B. ein einfaches Leuchtmittel wie z.B. eine einzelne LED verwendet werden, deren Leuchten oder Nicht-Leuchten dem Benutzer zwei unterschiedliche Zustände wie z.B. "Sicherungselement betätigt" oder "Sicherungselement nicht betätigt" anzeigen kann. Dies kann z.B. durch die Verwendung eines einfarbigen Leuchtmittels, in diesem Fall z.B. grün, unterstützt werden. Auch kann z.B. ein Nicht-Leuchten, ein dauerhaftes Leuchten und ein Blinken etc. verwendet werden, um zwischen drei Zuständen bzw. Informationen unterscheiden zu können. Beispielsweise kann durch ein Blinken der Zustand "Sicherungselement in Bewegung" angezeigt werden.

Auch kann eine zweifarbige, eine dreifarbige usw. LED verwendet werden, um die Anzahl von darstellbaren Informationen zu erhöhen. Hierzu können insbesondere für beide Farben Leuchten, Blinken, Glimmen sowie ein Nicht-Leuchten verwendet werden. Dies kann die Anzeige verschiedener Zustände des Routenzugelements z.B. in codierter Form ermöglichen und den Benutzer ggfs. auch zu Handlungen auffordern. Insbesondere könnten Störungen sowie Fehlbedienungen angezeigt werden.

Vorzugsweise ist das Anzeigeelement bzw. sind die Anzeigeelemente des ersten Routenzugelements und bzw. des zweiten Routenzugelements als Anzeigematrix ausgebildet. Mit anderen Worten kann eine flächige Anzeige schaffen werden, um umfangreichere Informationen anzuzeigen. Beispielsweise können Farb- oder Lichtflows in der Fahrtrichtung, einfache Icons, Pfeile, nummerische oder alphanummerische Codes in Verbindung mit Warnungen und dergleichen angezeigt werden. Insbesondere für den automatisierten oder teilautomatisierten Betrieb ist ein Anzeigen der Entnahme- oder Beladeposition für den Benutzer vergleichbar bekannten Pick-to-Light-Systemen möglich. Hierzu kann das Anzeigeelement z.B. als LED-Matrix ausgebildet sein, was die Kosten der Umsetzung einer Anzeigematrix vergleichsweise gering halten kann. Auch kann ein Bildschirm verwendet werden, welcher ggfs. als Touchscreen gleichzeitig als Bedien- bzw. Eingabeelement dienen kann, wie zuvor beschrieben.

Auf diese Art und Weise können auch umfangsreichere und bzw. oder komplexere Informationen an den Benutzer ausgegeben werden. Dies können z.B. Wörter, Wortfolgen sowie ganze Sätze oder auch mehrere Sätze sein. Auch können bildliche Darstellungen wie z.B. Symbole oder Bilder ausgegeben werden. Dies kann auch miteinander kombiniert werden. So können z.B. Informationen über ein aufgenommenes Logistikelement auf diese Art und Weise an den Benutzer ausgegeben werden. Auch können z.B. Handlungsabläufe z.B. des Entnehmens eines aufgenommenen Logistikelements z.B. durch eine Bildfolge angezeigt werden. Dies kann eine besonders intuitiv verständliche Ausgabe von Informationen für einen Benutzer ermöglichen. Diese optischen Anzeigemöglichkeiten können ggfs. auch mit akustischen Ausgaben kombiniert angewendet werden.

Vorzugsweise weist das erste Routenzugelement ein Paar in der Querrichtung versetzter Anzeigeelemente auf, welches ausgebildet ist, einer Person wenigstens eine Information anzuzeigen, und bzw. oder das zweite Routenzugelement weist ein Paar in der Querrichtung versetzter Anzeigeelemente auf, welches ausgebildet ist, einer Person wenigstens eine Information anzuzeigen. Hierdurch können die zuvor beschriebenen Möglichkeiten in der Querrichtung zu beiden Seiten hin zur Verfügung gestellt und dort jeweils von einem Benutzer verwendet werden.

Gemäß einem weiteren Aspekt der Erfindung können derartige Informationen auch akustisch an einen Benutzer ausgegeben werden. Dies kann entsprechend über einfache Töne erfolgen, welche sich z.B. in ihrer Lautstärke, in ihrer Frequenz und bzw. oder in ihrer Dauer unterscheiden können, um dem Benutzer z.B. unterschiedliche Zustände zu signalisieren. Auch können hierzu Tonfolgen verwendet werden.

Gemäß einem weiteren Aspekt der Erfindung können derartige Informationen auch mittels einer Sprachausgabe an einen Benutzer ausgegeben werden. Mit anderen Worten können Wörter, Wortfolgen oder ganzes Sätze sowie mehrere Sätze in Form von Sprache an den Benutzer ausgegeben werden, was die Verständlichkeit der Information verbessern und insbesondere intuitiver gestalten sowie den Inhalt und die Komplexität der Informationen erhöhen kann. Dies kann den Umgang eines Benutzer mit dem erfindungsgemäßen Routenzug vereinfachen, beschleunigen und bzw. oder intuitiver gestalten.

Die vorliegende Erfindung betrifft auch einen Schleppverbund mit einem Routenzug wie zuvor beschrieben und mit einem Zugfahrzeug, wobei das Zugfahrzeug eine Schleppverbund-Master-Steuerungseinheit aufweist, wobei die Routenzug-Master-Steuerungseinheit des ersten Routenzugelements des Routenzugs eine Schleppverbund-Slave-Steuerungseinheit dargestellt, und wobei die Schleppverbund-Master-Steuerungseinheit des Zugfahrzeugs mittels eines Schleppverbund-Busses signalübertragend mit der Schleppverbund-Slave-Steuerungseinheit des ersten Routenzugelements des Routenzugs verbunden ist. Auf diese Art und Weise können die zuvor beschriebenen Vorteile einer hierarchischen Master/Slave-Struktur innerhalb eines Routenzugs auf einen Schleppverbund übertragen werden, wobei der Routenzug nun die Rolle einer Slave-Einheit einnimmt.

Dies kann es insbesondere ermöglichen, dass die Schleppverbund-Master-Steuerungseinheit dem Routenzug zur Ausführung einer Funktion wie z.B. "alle Routenzugelemente absenken" verlassen und diese Anweisung von der Routenzug-Master-Steuerungseinheit als Schleppverbund-Slave-Steuerungseinheit auf die Routenzugelemente des Routenzugs heruntergebrochen und in konkrete Handlungen wie z.B. in das Betätigen elektrischer Antriebe umgesetzt werden kann. Dies kann die Umsetzung derartiger Anweisungen vereinfachen und insbesondere flexibler machen. Insbesondere kann die Programmierung der Schleppverbund-Master-Steuerungseinheit von den Details der Umsetzung derartiger Anweisungen am Routenzugelement entlastet und somit die Programmierung einfacher, schneller und bzw. oder flexibler gestaltet werden. Insbesondere können kundenspezifische Lösungen einfacher umgesetzt werden. Auch kann die Programmierung aus der Ebene des Schleppverbunds unabhängig von den verwendeten Routenzügen erfolgen, was die Kombination des Zugfahrzeugs mit Routenzügen unterschiedlicher Hersteller erlauben kann.

Zu den Funktionen des Schleppverbunds kann auch ein gesteuertes Anheben und Absenken einzelner Routenzüge vom Zugfahrzeug aus gehören. Auch kann die gesamte Routenzugsanordnung vom Zugfahrzeug aus zum Absenken und Anheben veranlasst werden. Beispielsweise kann ein Anheben des der gesamten Routenzugsanordnung über eine Sensorik wie z.B. eine Trittmatte oder eine Trittplatte am Zugfahrzeug, durch einen Sitzschalter am Zugfahrzeug und durch sonstige Sensoren am Zugfahrzeug veranlasst werden. Hierdurch kann der Benutzer auf das Zugfahrzeug aufsteigen und die gesamte Routenzugsanordnung wird angehoben. Gleichzeitig kann eine Fahrsperre am Zugfahrzeug gesetzt werden solange die gesamte Routenzugsanordnung oder einzelne Routenzugelemente noch nicht angehoben sind.

Gemäß einem Aspekt der Erfindung ist das Zugfahrzeug ein autonomes Zugfahrzeug. Dies kann die Nutzung der zuvor beschriebene Eigenschaften und Vorteile bei autonomen Zugfahrzeugen erlauben, um deren Eigenschaften und Vorteile miteinander zu kombinieren. Insbesondere kann die Busanbindung aller Komponenten des Schleppverbunds untereinander einem autonomen Betrieb des Schleppverbunds förderlich sein.

Die vorliegende Erfindung betrifft auch eine Routenzuganordnung oder einen Schleppverbund mit einem ersten Routenzug wie zuvor beschrieben und mit einem weiteren Routenzug und bzw. oder mit einem Zugfahrzeug. Die Routenzuganordnung oder der Schleppverbund ist dadurch gekennzeichnet, dass der erste Routenzug (jeweils) mittels einer flexiblen Scherenkopplung mit dem weiteren Routenzug und bzw. oder mit dem Zugfahrzeug verbunden ist. Mit anderen Worten kann ein Routenzugelement des ersten Routenzugs an seinem einen Ende mittels einer flexiblen Scherenkopplung entweder mit dem weiteren Routenzugelement eines weiteren Routenzugs oder mit dem Zugfahrzeug verbunden sein. Auch kann ein Routenzugelement des ersten Routenzugs an seinem einen Ende mittels einer flexiblen Scherenkopplung mit dem Routenzugelement des weiteren Routenzugs und an seinem anderen Ende mittels einer weiteren flexiblen Scherenkopplung mit dem Zugfahrzeug verbunden sein.

Es ist bekannt, derartige Routenzugelemente mittels einer starren Scherenkopplung miteinander bzw. mit dem Zugfahrzeug zu verbinden, wie es beispielsweise aus der DE 10 2011 106 842 A1 bekannt ist. Um die sich hieraus ergebenden Nachteile teilweise oder vollständig zu vermeiden oder zumindest zu reduzieren wird erfindungsgemäß stattdessen eine flexible Scherenkopplung verwendet. Unter einer flexiblen Scherenkopplung ist, im Gegensatz zu der bekannten starren Scherenkopplung, eine Scherenkopplung zu verstehen, welche konstruktiv bedingt ausreichend räumliche Flexibilität besitzt bzw. zulässt, so dass die beiden mittels der flexiblen Scherenkopplung verbundenen Routenzugelemente gegenüber einander bzw. das Routenzugelement gegenüber dem Zugfahrzeug in der vertikalen Richtung abgesenkt und angehoben werden können, ohne dass hierbei eine Behinderung oder Blockade des Absenkens und Anhebens auftreten kann. Dies kann über mechanische Verbindungselemente wie z.B. Kugelkopfgelenke oder dergleichen erfolgen.

Auf diese Art und Weise kann erfindungsgemäß das Routenzugelement des ersten Routenzugs gegenüber dem Routenzugelement des weiteren Routenzugs und bzw. oder gegenüber dem Zugfahrzeug wie zuvor beschrieben angehoben und abgesenkt werden, ohne dass diese Bewegung behindert oder verhindert wird bzw. ohne dass sich diese Bewegung auf das Routenzugelement des weiteren Routenzugs und bzw. oder auf das Zugfahrzeug auswirkt. Das Absenken und Anheben des Routenzugselements des ersten Routenzugs kann beidseitig oder einseitig erfolgen, wie zuvor beschrieben.

Hierdurch kann es vermieden werden, dass alle Routenzugelemente einer Routenzuganordnung bzw. eines Schleppverbundes gemeinsam abgesenkt und angehoben werden müssen, wie bisher bekannt. Dies kann in vielen Fällen unnötig sein, da üblicherweise an einem Zwischenstopp eines Weges des Schleppverbunds nur ein Logistikelement abzugeben, aufzunehmen oder auszutauschen ist, ggfs. auch mehrere Logistikelemente, jedoch üblicherweise nicht alle Logistikelemente. Werden dennoch alle Routenzugelemente des Schleppverbunds gemeinsam abgesenkt und angehoben, so führt die zu einem unnötigen Aufwand in Form von Energieverbrauch sowie Abnutzung der Routenzugelemente. Dieser unnötige Aufwand kann erfindungsgemäß dadurch verwendet werden, dass zumindest einige Routenzugelemente nicht abgesenkt werden müssen, um das Absenken eines Routenzugelements zu ermöglichen. Dies gilt insbesondere für bisher bekannte starre Scherenkopplungen, bei denen ein Absenken eines Routenzugelements auch das Absenken des Zugfahrzeugs erfordert, was erfindungsgemäß durch die Verwendung einer flexiblen Scherenkopplung vermieden werden kann. Auch kann die Rampenfähigkeit der Routenzuganordnung oder des Schleppverbunds verbessert werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Routenzugs;
- Fig. 2: eine seitliche schematische Darstellung eines erfindungsgemäßen Schleppverbunds; und
- Fig. 3: eine weitere seitliche schematische Darstellung des erfindungsgemäßen Schleppverbunds.

Die o.g. Figuren werden in kartesischen Koordinaten betrachtet. Es erstreckt sich eine Längsrichtung X, welche auch als Tiefe X oder Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

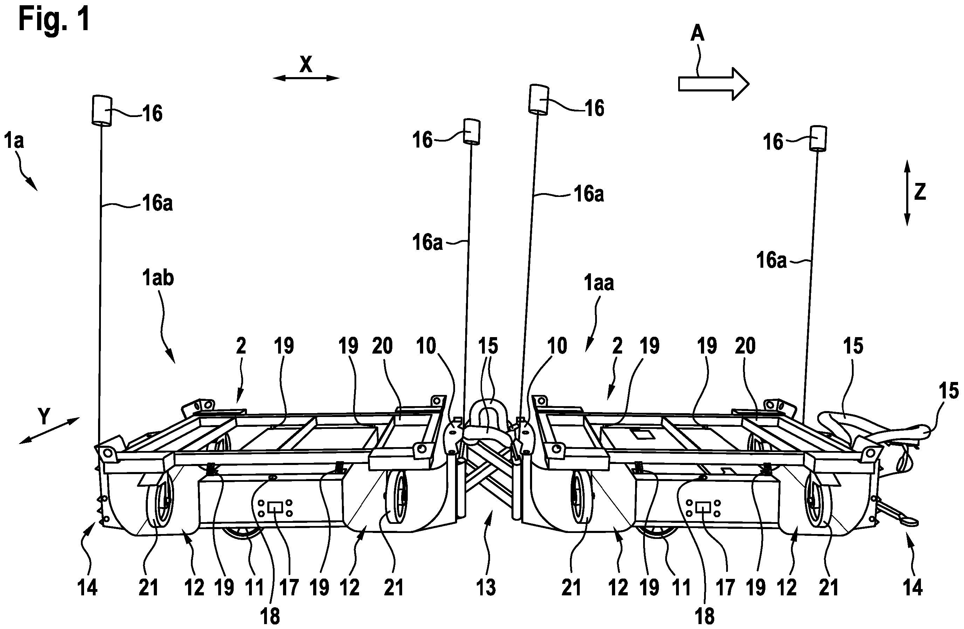

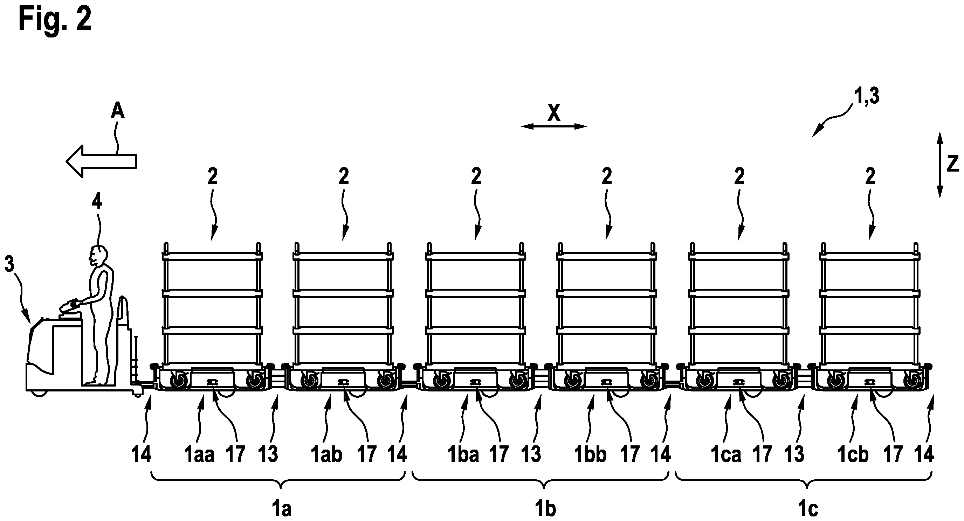

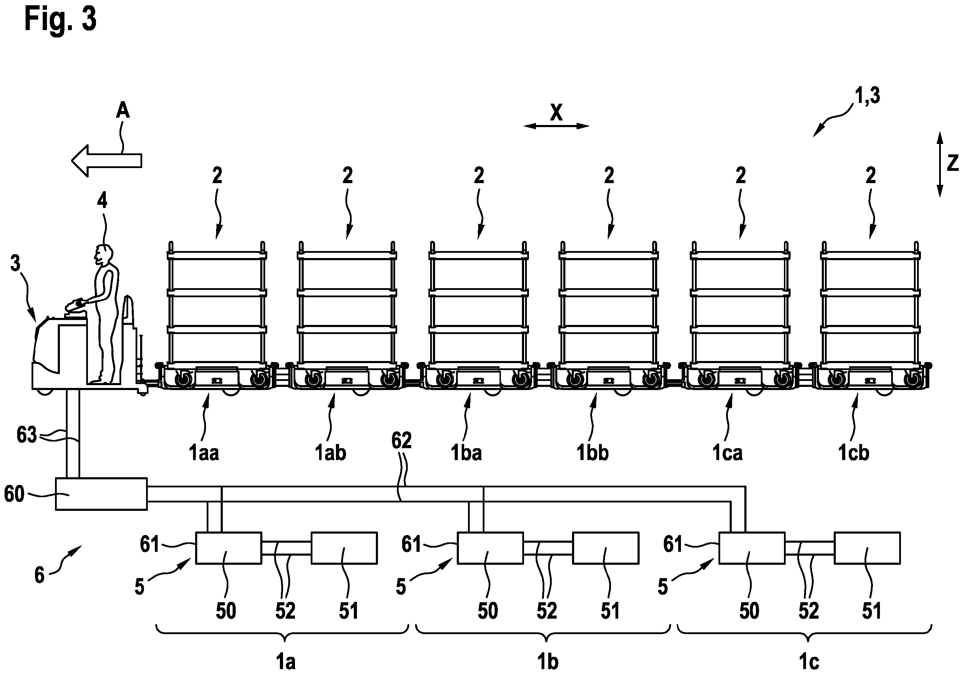

Es wird ein erfindungsgemäßer Routenzug 1a betrachtet, welcher einen ersten Routenzug 1a innerhalb einer Routenzuganordnung 1 darstellt, welche ferner einen zweiten Routenzug 1b und einen dritten Routenzug 1c aufweist. Jeder der drei Routenzüge 1a, 1b, 1c weist jeweils ein erstes Routenzugelement 1aa, 1ba, 1ca sowie ein zweites Routenzugelement 1ab, 1bb, 1cb auf, siehe Figur 1. Die Routenzuganordnung 1 bildet zusammen mit einem Zugfahrzeug 3, welches von einer Person 4 als Bediener 4 bedient wird, einen Schleppverbund 1, 3, siehe Figuren 2 und 3. Der Schleppverbund 1, 3 kann sich in einer Bewegungsrichtung A bzw. in einer Fahrtrichtung A bewegen.

Die Routenzugelemente 1aa-1cb selbst sind im Wesentlichen identisch ausgebildet. So weist jedes Routenzugelement 1aa-1cb einen Rahmen 10 auf, welcher als B-Rahmen bzw. als Überladerahmen ausgebildet ist und auch als Gestell 10 bezeichnet werden kann. An dem Gestell 10 ist jeweils ein Paar von Rädern 11 angeordnet, welche unabhängig voneinander in der Höhe Z angehoben und abgesenkt werden können. Hierdurch kann eine Seite der Querrichtung Y in der Höhe Z unabhängig von der in Querrichtung Y gegenüberliegenden Seite abgesenkt und angehoben werden. Die Räder 11 sind entgegen der Fahrtrichtung A zur Mitte versetzt angeordnet und besitzen keine gemeinsame physikalische Achse.

In der Fahrtrichtung A ist jeweils vor und hinter den Rädern 11 eine Logistikelementaufnahme 12 vorgesehen. Dort können in der Querrichtung Y Logistikelemente 2 in Form von Trolleys 2 mit ihren Rädern 21 eingeschoben bzw. entnommen werden. Auf den Rahmen 20 der Trolleys 2, welche die vier Räder 21 verbinden, können zu transportierende Gegenstände angeordnet werden (nicht dargestellt). Die Rahmen 20 der Trolleys 2 können auch als Gestelle 20 bezeichnet werden.

Wie in der Figur 3 schematisch dargestellt, unterscheiden sich die Routenzugelemente 1aa-1cb erfindungsgemäß durch ihre Steuerungseinheiten 50, 51. So weist jeweils das erste Routenzugelement 1aa, 1ba, 1ca der Routenzüge 1a-1c eine Routenzug-Master-Steuerungseinheit 50 auf, welche jeweils als speicherprogrammierbare Steuerung (SPS) ausgebildet ist und daher auch als Routenzug-Master-SPS 50 bezeichnet werden kann. Die zweiten Routenzugelemente 1ab, 1bb, 1cb der Routenzüge 1a-1c weisen jeweils eine Routenzug-Slave-Steuerungseinheit 51 auf, welche ebenfalls jeweils als speicherprogrammierbare Steuerung (SPS) ausgebildet ist und daher auch als Routenzug-Slave-SPS 51 bezeichnet werden kann. Die Routenzug-Master-SPS 50 und Routenzug-Slave-SPS 51 eines Routenzugs 1a-1c sind jeweils durch einen Routenzug-Bus 52 in Form eines drahtgebundenen Routenzug-CAN-Busses 52 signalübertragend miteinander verbunden. Die Routenzug-Master-SPS 50, die Routenzug-Slave-SPS 51 sowie der Routenzug-CAN-Bus 52 können jeweils zusammen als Routenzugsteuerung 5 bezeichnet werden.

Auf höherer Steuerungsebene fungieren die Routenzug-Master-SPS 50 jeweils als Schleppverbund-Slave-Steuerungseinheit 61 bzw. als Schleppverbund-Slave-SPS 61 des jeweiligen Routenzugs 1a-1c, welche mittels eines Schleppverbund-Busses 62 in Form eines Schleppverbund-CAN-Busses 62 sowohl miteinander als auch mit einer Schleppverbund-Master-Steuerungseinheit 60 in Form einer Schleppverbund-Master-SPS 60 verbunden sind und gemeinsam eine Schleppverbundsteuerung 6 bilden. Die Schleppverbundsteuerung 6 ist mittels einer Anbindung 63 über die Schleppverbund-Master-SPS 60 signalübertragend dem Zugfahrzeug 3 verbunden.

Auf diese Art und Weise können zum einen Anweisungen von dem Zugfahrzeug 3 bzw. von dessen Benutzer 4 über die Anbindung 63 an die Schleppverbund-Master-SPS 60 übermittelt und dort so umgesetzt werden, dass diese Anweisungen an den betroffenen Routenzug 1a-1c bzw. an dessen Routenzug-Master-SPS 50 als Schleppverbund-Slave-SPS 61 weitergeleitet werden können. Dort kann diese Anweisung dann von der Routenzug-Master-SPS 50 weiter konkretisiert und seitens des entsprechenden ersten Routenzugselements 1aa, 1ba, 1ca des Routenzugs 1a-1c jeweils selbst ausgeführt und bzw. oder als Anweisung über den jeweiligen Routenzug-CAN-Bus 52 an das jeweils entsprechende zweite Routenzugelement 1ab, 1bb, 1cb des Routenzugs 1a-1c weitergeleitet werden, um dort durch die jeweilige Routenzug-Slave-SPS 51 umgesetzt zu werden. Dies kann die Umsetzung auch komplexer Funktionen mit vergleichsweise einfachen Mitteln erlauben, indem ein hierarchisches Master-/Slave-Steuerungskonzept sowohl auf der Ebene des Schleppverbund 1, 3 sowie auf der Ebene jedes einzelnen Routenzugs 1a-1c verwendet wird.

Mittels der Verwendung der zuvor beschriebenen erfindungsgemäßen Routenzugsteuerung 5 sowie Schleppverbundsteuerung 6 kann beispielsweise ein Absenken oder Anheben eines ganzen Routenzugs 1a-1c ermöglicht werden. Hierzu können die Räder 11 der Routenzugelemente 1aa-1cb einseitig oder beidseitig mittels entsprechender elektrischer Antriebe, gleichzeitig oder zeitversetzt, abgesenkt oder angehoben werden. Die Ansteuerung der elektrischen Antriebe kann direkt durch die Routenzug-Master-SPS 50 bei dem jeweiligen ersten Routenzugelement 1aa, 1ba, 1ca der Routenzüge 1a-1c erfolgen oder von der Routenzug-Master-SPS 50 des jeweiligen Routenzugs 1a-1c mittels der Routenzug-Slave-SPS 51 bei dem jeweiligen zweiten Routenzugelement 1ab, 1bb, 1cb veranlasst werden.

Jedes Routenzugelement 1aa-1cb des Schleppverbunds 1, 3 weist ferner ein Paar von Bedienelementen 17 auf, welche jeweils als Taster 17 und insbesondere als Fußtaster 17 ausgebildet sind. Die Fußtaster 17 sind jeweils in der Querrichtung Y seitlich am Rahmen 10 des Routenzugelements 1aa-1cb angeordnet, so dass sie vom Benutzer 4 mit dem Fuß gut erreicht und durch Drücken betätigt werden können. Hierdurch können Bedieneingaben vom Benutzer 4 getätigt werden, welche von der jeweiligen Routenzug-Slave-SPS 51 bzw. Routenzug-Master-SPS 50 erfasst werden können. Diese Bedieneingaben können von der Routenzug-Master-SPS 50 direkt erfasst oder über den Routenzug-CAN-Bus 52 von der Routenzug-Slave-SPS 51 erhalten werden. In jedem Fall kann seitens der Routenzug-Master-SPS 50 z.B. durch ein einseitiges Absenken des entsprechenden Routenzugelements 1aa-1cb zu der Seite des Fußtasters 17 hin reagiert werden. Zusätzlich oder alternativ kann die Information der Betätigung des Fußtasters 17 auch der Schleppverbund-Master-SPS 60 zur Verfügung gestellt werden. Dies kann z.B. zu einer entsprechenden Anzeige des Zugfahrzeugs 3 führen.

Jedes Routenzugelement 1aa-1cb des Schleppverbunds 1, 3 weist ferner ein Paar von Anzeigeelementen 18 auf, welche jeweils am Rand des Rahmens 10 oberhalb der Fußtaster 17 angeordnet und beispielsweise als grüne LEDs 18 ausgebildet sind. Hierdurch kann dem Benutzer 4 von oben gut sichtbar eine Information dadurch angezeigt werden, indem die grüne LED 18 z.B. leuchtet oder nicht.

Jedes Routenzugelement 1aa-1cb des Schleppverbunds 1, 3 weist des Weiteren in der Querrichtung Y auf jeder Seite ein Paar von Sicherungselementen 19 auf, welche in der Längsrichtung X beidseitig der grünen LEDs 18 am Rahmen 10 angeordnet sind und auch als Halteelemente 19 bezeichnet werden können. Die Sicherungselemente 19 sind jeweils bogenförmig ausgeführt und drehbeweglich angeordnet, so dass die Sicherungselemente 19 durch Schwenken im Wesentlichen in der vertikalen Richtung Z randseitig nach oben aus dem Rahmen 10 herausgefahren sowie in diesen eingefahren werden können. Die Sicherungselemente 19 sind jeweils so ausgebildet, dass ein aufgenommenes Logistikelement 2 im ausgefahrenen Zustand eines Paares von Sicherungselementen 19 zu dieser Seite des Routenzugelements 1aa-1cb in der Querrichtung Y weder selbsttätig herunterrollen noch von einem Benutzer 4 entnommen werden kann. Hierdurch kann insbesondere während einer Bewegung des Routenzugselements 1aa-1cb ein ungewolltes Herunterrollen eines aufgenommenen Logistikelements 2 verhindert werden. Hierzu ist das jeweilige Paar von Sicherungselementen 19 in den Rahmen 10 einzufahren, was seitens der jeweiligen Routenzug-SPS 50, 51 veranlasst werden kann.

Die Routenzugelemente 1aa-1cb des Schleppverbunds 1, 3 sind abwechselnd durch starre Scherenkopplungen 13 und durch flexible Scherenkopplungen 14 miteinander verbunden. Hierdurch können die Vorteile von Scherenkopplungen 13, 14 zwischen allen Routenzugelementen 1aa-1cb genutzt werden, was dem Schleppverbund 1, 3 u.a. eine vergleichsweise geringe Länge, einen engen Kurvenradius etc. ermöglichen kann.

Innerhalb der drei Routenzüge 1a-1c sind die jeweiligen Routenzugelemente 1aa-1cb untereinander mit starren Scherenkopplungen 13 miteinander verbunden, so dass ein Routenzug 1a-1c jeweils lediglich als Ganzes einseitig oder beidseitig abgesenkt und angehoben werden kann. Dies kann die Verwendung der mechanisch einfacheren und kostengünstigeren starren Scherenkopplungen 13 an diesen Stellen ermöglichen.

Jede starre Scherenkopplung 13 weist hierzu ein Paar von sich überkreuzenden Verbindungselementen auf, welche auch als Lenker oder als Gestänge bezeichnet werden können. Die beiden Lenker weisen jeweils an ihren beiden Enden eine starre Halterungselementaufnahme auf, welche sich mit einer Durchgangsöffnung in der Höhe Z erstreckt und auch als Hülse bezeichnet werden kann. Durch die Hülse hindurch wird jeweils in der Höhe Z ein Halterungselement in Form eines Bolzens geführt, welches ferner oben und unten durch Durchgangsöffnungen des Rahmens 10 des Routenzugelements 1aa-1cb geführt wird. Hierdurch kann eine um die Hochachse drehbewegliche Verbindung jeweils eines Endes eines Lenkers mit dem jeweiligen Routenzugelement 1aa-1cb geschaffen werden, so dass jeweils eine starre Scherenkopplung 13 zwischen den beteiligten Routenzugelementen 1aa-1cb umgesetzt werden kann.

Die Bolzen weisen jeweils an ihrem oberen Ende einen Handgriff auf, an dem eine Person 4 den Bolzen aus der Hülse sowie aus dem Rahmen 10 herausziehen und hierdurch die drehbewegliche Verbindung zwischen den beteiligten Routenzugelementen 1aa-1cb trennen kann. Wird dies an den beiden Enden der Lenker desselben Routenzugelements 1aa-1bc ausgeführt, so können die beiden Routenzugelemente 1aa-1bc dieser starren Scherenkopplung 13 voneinander getrennt werden. Umgekehrt können so zwei Routenzugelemente 1aa-1bc miteinander verbunden werden. Der Handgriff kann mittels eines Sicherungselements in der verbindenden Lage gesichert werden, um sich bei einer Fahrt des Schleppverbunds 1, 3 nicht zu lösen.

Die drei Routenzüge 1a-1c sind untereinander jedoch durch jeweils eine flexible Scherenkopplung 14 miteinander verbunden. Dies gilt ebenso für das erste Routenzugelement 1aa des ersten Routenzugs 1a gegenüber dem Zugfahrzeug 3. Die Elemente der flexiblen Scherenkopplungen 14 entsprechend dabei grundsätzlich den Elementen der zuvor beschriebenen starren Scherenkopplungen 13, d.h. auch hier sind sich kreuzende Verbindungselemente in Form von Lenkern bzw. Gestängen vorhanden. Jedoch weisen die Enden der Lenker in diesem Fall jeweils eine flexible Halterungselementaufnahme auf, welche im betrachteten Ausführungsbeispiel als Kugelkopfgelenk ausgebildet sind und auch als Kugelkalottenkupplung bezeichnet werden können. Jedes Kugelkopfgelenk weist eine Kugelkalottenaufnahme auf, welche feststehend am Ende des jeweiligen Lenkers angeordnet ist. Innerhalb der Kugelkalottenaufnahme ist eine Kugelkalotte angeordnet, welche von der Kugelkalottenaufnahme in der Höhe Z horizontal abschnittsweise umgriffen und so innerhalb der Kugelkalottenaufnahme gehalten wird. Die Kugelkalotte ist aufgrund der einander zugewandten jeweils kugelförmigen Oberflächen gegenüber der Kugelkalottenaufnahme kardanisch drehbar.

Durch die Kugelkalotte hindurch wird ein Halterungselement in Form eines Bolzens geführt, welches wie zuvor hinsichtlich der starren Scherenkopplung 13 beschrieben vom Rahmen 10 des Routenzugelements 1aa-1bc bzw. des Zugfahrzeugs 3 gehalten wird. Auch hier ist jeweils ein Handgriff wie zuvor beschrieben vorhanden, welcher wie zuvor beschrieben mittels eines Sicherungselements gesichert werden kann.

Ergänzend ist jeweils bei einem der beiden Lenker einer flexiblen Scherenkopplung 14 an beiden Enden ein Abstandhalter in Form einer geschlossenen Hülse um den jeweiligen Bolzen herum angeordnet. Hierdurch kann das jeweilige Kugelkopfgelenk in der Höhe Z gegenüber dem Rahmen 10 des Routenzugelements 1aa-1cb angehoben werden, so dass sich die beiden Lenker übereinanderliegend überkreuzen können und der höher angeordnete Lenken mit seinen beiden Enden auf dem jeweiligen Abstandshalter aufliegen kann.

Durch die Verwendung der zuvor beschriebenen erfindungsgemäßen Routenzugsteuerung 5 sowie Schleppverbundsteuerung 6 kann es z.B. ermöglicht werden, dass der Schleppverbund 1, 3 vom Benutzer 4 angehalten wird. Der Benutzer 4 kann nun zum ersten Routenzugelement 1aa des ersten Routenzugs 1a gehen, dessen aufgenommenes Logistikelement 2 entnommen werden soll. Der Benutzer 4 tritt mit einem Fuß gegen den im zugewandten Fußtaster 17. Dies wird seitens der Routenzug-Master-SPS 50 des ersten Routenzugelements 1aa des ersten Routenzugs 1a erfasst und direkt von der Routenzug-Master-SPS 50 dahingehend verarbeitet, dass das entsprechende Paar von Sicherungselementen 19 eingezogen und hierdurch eine Bewegung des aufgenommenen Logistikelements 2 in der Querrichtung Y zu dieser Seite hin ermöglicht wird. Gleichzeitig kann die grüne LED 18 auf dieser Seite des ersten Routenzugelements 1aa des ersten Routenzugs 1a von dessen Routenzug-Master-SPS 50 ausgeschaltet werden um dem Benutzer 4 anzuzeigen, dass die Sicherungselemente 19 auf dieser Seite dieses Routenzugselements 1aa das aufgenommene Logistikelement 2 nicht mehr sichern.

Ferner kann das Rad 11 auf dieser Seite des ersten Routenzugelements 1aa des ersten Routenzugs 1a von dessen Routenzug-Master-SPS 50 eingefahren werden, indem der elektrische Antrieb entsprechend von der Routenzug-Master-SPS 50 betätigt wird. Gleichzeitig kann die Routenzug-Slave-SPS 51 des zweiten Routenzugelements 1ab des ersten Routenzugs 1a von der Routenzug-Master-SPS 50 des ersten Routenzugelements 1aa des ersten Routenzugs 1a dazu angewiesen werden, die entsprechende selbe Seite ebenfalls abzusenken, was seitens der Routenzug-Slave-SPS 51 durch Betätigen des elektrischen Antriebs des Rads 11 auf derselben Seite umgesetzt werden kann.

Hierdurch kann der erste Routenzug 1a in der Querrichtung Y zu einer Seite hin bis auf den Untergrund abgesenkt werden. Da jedoch die Sicherungselemente 19 des zweiten Routenzugelements 1ab des ersten Routenzugs 1a noch ausgefahren sind, verbleibt das dort aufgenommene Logistikelement 2 auf den Logistikelementaufnahmen 12 des zweiten Routenzugelements 1ab des ersten Routenzugs 1a während das von dem ersten Routenzugelement 1aa des ersten Routenzugs 1a aufgenommene Logistikelement 2 dem Benutzer 4 entgegenrollt und hierdurch einfach und mit vergleichsweise geringem Kraftaufwand von dem Benutzer 4 entnommen werden kann.

Nach einem gewissen zeitlichen Versatz von z.B. ca. 10 Sekunden wird dann auch die gegenüberliegende Seite des Routenzugs 1a wie zuvor beschrieben bis auf den Untergrund abgesenkt, so dass das erste Routenzugelement 1aa des ersten Routenzugs 1a nun wieder mit einem Logistikelement 2 beladen werden kann. Durch ein erneutes Betätigen desselben Fußtasters 17 kann der erste Routenzug 1a als Ganzes wieder angehoben werden, um den Schleppverbund 1, 3 bewegen zu können.

Soll ein Beladen von der gegenüberliegende Seite in der Querrichtung Y erfolgen, kann z.B. durch ein Betätigen des dortigen Fußtasters 17 das Paar von Sicherungselementen 19 auf dieser Seite ebenfalls eingefahren werden, damit die Sicherungselemente 19 das Aufschieben bzw. Rollen eines aufzunehmenden Logistikelements 2 von dieser Seite aus nicht behindern. Alternativ kann dieses Paar von Sicherungselementen 19 auch dann selbsttätig eingefahren werden, wenn das Absenken dieser Seite des ersten Routenzugelements 1aa des ersten Routenzugs 1a erfolgt oder zeitlich unmittelbar danach.

Soll ferner das von dem zweiten Routenzugselement 1ab des ersten Routenzugs 1a aufgenommene Logistikelement 2 wie zuvor beschrieben entnommen werden, so kann der Benutzer 4 nun mit dem Fuß auch den Fußtaster 17 des zweiten Routenzugselements 1ab des ersten Routenzugs 1a betätigen. Dies wird von der Routenzug-Master-SPS 50 des zweiten Routenzugelements 1ab des ersten Routenzugs 1a erfasst und an die Routenzug-Master-SPS 50 des ersten Routenzugelements 1aa des ersten Routenzugs 1a übermittelt.

Seitens der Routenzug-Master-SPS 50 des ersten Routenzugelements 1aa des ersten Routenzugs 1a werden nun beide Routenzugselemente 1aa, 1ab des ersten Routenzugs 1a angehoben. Im horizontal ausgerichteten Zustand wird nun auch das Paar von Sicherungselementen 19 der Seite des zweiten Routenzugelements 1ab des ersten Routenzugs 1a eingezogen, zu der hin dessen aufgenommenes Logistikelement 2 entnommen werden soll, sowie die entsprechende grüne LED 18 deaktiviert. Anschließend werden die beiden Routenzugelemente 1aa, 1ab des ersten Routenzugs 1a wieder gemeinsam zu der entsprechenden Seite abgesenkt, so dass nun auch das von dem zweiten Routenzugelement 1ab des ersten Routenzugs 1a aufgenommene Logistikelement 2 dem Benutzer 4 entgegenrollen und hierdurch einfach und mit vergleichsweise geringem Kraftaufwand von dem Benutzer 4 entnommen werden kann.

Danach kann erneut nach einem gewissen zeitlichen Versatz von ca. 10 Sekunden die gegenüberliegende Seite des Routenzugs 1a wie zuvor beschrieben erneut bis auf den Untergrund abgesenkt werden, so dass auch das zweite Routenzugelement 1ab des ersten Routenzugs 1a nun wieder mit einem Logistikelement 2 beladen werden kann.

Unabhängig von der Verwendung der Scherenkopplungen 13, 14 ist bei jeder Scherenkopplung 13, 14 jeweils ein Paar von flexiblen Schutzelementen 15 angeordnet, welche primär als Kabelschläuche 15 zur Aufnahme elektrischer Leitungen zur Energieübertragung sowie zur Signalübertragung dienen. Zusätzlich werden diese Kabelschläuche 15 dazu verwendet, seitlich in der Querrichtung Y in die Zwischenräume hineinzuragen, welche sich zwischen den Routenzugelementen 1aa-1cb bzw. gegenüber dem Zugfahrzeug 3 bilden und insbesondere bei Drehbewegungen eines Routenzugelements 1aa-1cb gegenüber einem weiteren Routenzugelement 1aa-1cb bzw. gegenüber dem Zugfahrzeug 3 wie z.B. bei einer Kurvenfahrt vergrößern können.

Daher werden die Kabelschläuche 15 paarweise und zur Fahrtrichtung A in der Querrichtung Y spiegelsymmetrisch angeordnet, so dass sie jeweils mit ihren beiden Enden möglichst nahe beieinander am Rahmen 10 der Routenzugelemente 1aa-1cb bzw. des Zugfahrzeugs 3 angeordnet sind. Ferner sind die Kabelschläuche 15 ausreichend lang dimensioniert, so dass sie sich bei zwei geradlinig zueinander ausgerichteten Routenzugelementen 1aa-1cb schlaufenartig in der Querrichtung Y bis etwa über die gesamte Breite der Routenzugelemente 1aa-1cb erstrecken, siehe z.B. Figur 1. Hierdurch kann in dieser Anordnung der Zwischenraum möglichst zwischen den Routenzugelementen 1aa-1cb bzw. einem Routenzugelement 1aa und dem Zugfahrzeug 3 vollständig ausgefüllt und somit optisch sowie körperlich ausgefüllt werden um zu verhindern, dass eine Person 4 in diesen Zwischenraum gelangen kann.

Wird eine etwa 90° Drehung der beiden Routenzugelemente 1aa-1cb zueinander ausgeführt, sind die Kabelschläuche 15 noch ausreichend dimensioniert, um diesen Zwischenraum zumindest ausreichend zu füllen um eine Person 4 davon abzuhalten, an dieser Stelle über die Scherenkopplung 13, 14 hinwegzusteigen und lieber um den Schleppverbund 1, 3 herum zu gehen. In dieser Konstellation spannt sich der nach außen zeigende Kabelschlauch 15 auf der offenen Seite des Zwischenraums vor die Lenker der Scherenkopplung 13, 14. Dies kann jeweils die Sicherheit des Schleppverbunds 1, 3 für Personen 4 erhöhen.

Jedes Routenzugelement 1aa-1cb weist zwei Hinweiselemente 16 in Form von Fahnen 16 auf, welche jeweils mittels einer Hinweiselementhalterung 16a in Form einer Fahnenstange 16a gegenüber dem Rahmen 10 des jeweiligen Routenzugelements 1aa-1cb in der Höhe Z erhöht angeordnet sind, so dass eine Person 4 die Fahnen 16 optisch möglichst gut wahrnehmen kann. Dies soll verhindern, dass ein Routenzugelement 1aa-1cb, insbesondere ohne in der Höhe Z merkliche Beladung eines Trolleys 2, von der Person 4 übersehen werden kann, was zu Unfällen führen kann.

Von dem beschriebenen Schleppverbund 1, 3 können beim Fahren problemlos Rampen und dergleichen von 10 % Steigung überfahren werden. Dabei haben beide Räderpaare des Routenzugs 1a-1c stets Bodenkontakt.

### BEZUGSZEICHENLISTE (Teil der Beschreibung)

- A: Bewegungsrichtung; Fahrtrichtung
- X: Längsrichtung; Tiefe; Länge
- Y: Querrichtung, Breite
- Z: vertikale Richtung; Höhe
- 1: Routenzuganordnung
- 1a: erster Routenzug
- 1aa: erstes Routenzugelement bzw. erster Routenzuganhänger des ersten Routenzugs 1a
- 1ab: zweites Routenzugelement bzw. zweiter Routenzuganhänger des ersten Routenzugs 1a
- 1b: zweiter Routenzug
- 1ba: erstes Routenzugelement bzw. erster Routenzuganhänger des zweiten Routenzugs 1b
- 1bb: zweites Routenzugelement bzw. zweiter Routenzuganhänger des zweiten Routenzugs 1b
- 1c: dritter Routenzug
- 1ca: erstes Routenzugelement bzw. erster Routenzuganhänger des dritten Routenzugs 1c
- 1cb: zweites Routenzugelement bzw. zweiter Routenzuganhänger des dritten Routenzugs 1c
- 10: Rahmen eines Routenzugelements 1a, 1b; Gestell eines Routenzugelements 1a, 1b
- 11: Räder eines Routenzugelements 1a, 1b
- 12: Logistikelementaufnahmen eines Routenzugelements 1a, 1b
- 13: starre Scherenkopplung
- 14: flexible Scherenkopplung
- 15: flexible Schutzelemente; Kabelschläuche
- 16: Hinweiselemente; Fahnen
- 16a: Hinweiselementhalterungen; Fahnenstangen
- 17: Bedienelement; Taster; Fußtaster
- 18: Anzeigeelement; LED
- 19: Sicherungselemente; Halteelemente

- 2: Logistikelemente; Trolleys
- 20: Rahmen eines Logistikelements 2; Gestell eines Logistikelements 2
- 21: Räder eines Logistikelements 2

- 3: Zugfahrzeug

- 4: Person; Bediener

- 5: Routenzugsteuerung
- 50: Routenzug-Master-Steuerungseinheit; Routenzug-Master-SPS
- 51: Routenzug-Slave-Steuerungseinheit; Routenzug-Slave-SPS
- 52: Routenzug-Bus; Routenzug-CAN-Bus

- 6: Schleppverbundsteuerung
- 60: Schleppverbund-Master-Steuerungseinheit; Schleppverbund-Master-SPS
- 61: Schleppverbund-Slave-Steuerungseinheit; Schleppverbund-Slave-SPS
- 62: Schleppverbund-Bus; Schleppverbund-CAN-Bus
- 63: Anbindung der Schleppverbundsteuerung 6 am Zugfahrzeug 3

## Patentansprüche

1. Routenzug (1a) mit
einem ersten Routenzugelement (1aa), welches ausgebildet ist, wenigstens ein Logistikelement (2) aufzunehmen, und mit
einem zweiten Routenzugelement (1ab), welches ausgebildet ist, wenigstens ein Logistikelement (2) aufzunehmen,
**dadurch gekennzeichnet, dass**
das erste Routenzugelement (1aa) eine Routenzug-Master-Steuerungseinheit (50) aufweist, und dass
das zweite Routenzugelement (1ab) eine Routenzug-Slave-Steuerungseinheit (51) aufweist,
wobei die Routenzug-Master-Steuerungseinheit (50) des ersten Routenzugelements (1aa) mittels eines Routenzug-Busses (52) signalübertragend mit der Routenzug-Slave-Steuerungseinheit (51) des zweiten Routenzugelements (1ab) verbunden ist.

2. Routenzug (1a) nach Anspruch 1, **dadurch gekennzeichnet, dass**
die Routenzug-Master-Steuerungseinheit (50) des ersten Routenzugelements (1aa) ausgebildet ist, zumindest eine Funktion des ersten Routenzugelements (1aa) zu veranlassen, und dass
die Routenzug-Slave-Steuerungseinheit (51) des zweiten Routenzugelements (1ab) ausgebildet ist, zumindest eine Funktion des zweiten Routenzugelements (1ab) zu veranlassen,
wobei die Routenzug-Master-Steuerungseinheit (50) des ersten Routenzugelements (1aa) ferner ausgebildet ist, eine Funktion des zweiten Routenzugelements (1ab) mittels dessen Routenzug-Slave-Steuerungseinheit (51) zu veranlassen.

3. Routenzug (1a) nach Anspruch 1 oder 2, **dadurch gekennzeichnet, dass**
die Routenzugelemente (1aa, 1ab) jeweils ausgebildet sind, auf wenigstens einer Seite der Querrichtung (Y) in der vertikalen Richtung (Z) unabhängig von der in Querrichtung (Y) gegenüberliegenden Seite abgesenkt und angehoben zu werden,
wobei die Routenzug-Master-Steuerungseinheit (50) des ersten Routenzugelements (1aa) ausgebildet ist, das einseitige und/oder beidseitige Absenken und Anheben des ersten Routenzugelements (1aa) zu veranlassen,
wobei die Routenzug-Master-Steuerungseinheit (50) des ersten Routenzugelements (1aa) ferner ausgebildet ist, das einseitige und/oder beidseitige Absenken und Anheben des zweiten Routenzugelements (1ab) mittels dessen Routenzug-Slave-Steuerungseinheit (51) zu veranlassen.

4. Routenzug (1a) nach Anspruch 3, **dadurch gekennzeichnet, dass**
die Routenzugelemente (laa, 1ab) starr gekoppelt miteinander verbunden sind,
wobei die Routenzug-Master-Steuerungseinheit (50) des ersten Routenzugelements (1aa) ausgebildet ist, das einseitige und/oder beidseitige Absenken und Anheben des ersten Routenzugelements (1aa) gemeinsam mit dem einseitigen und/oder beidseitigen Absenken und Anheben des zweiten Routenzugelements (1ab) mittels dessen Routenzug-Slave-Steuerungseinheit (51) zu veranlassen.

5. Routenzug (1a) nach Anspruch 4, **dadurch gekennzeichnet, dass**
die Routenzugelemente (laa, 1ab) mittels einer starren Scherenkopplung (13) starr gekoppelt miteinander verbunden sind.

6. Routenzug (1a) nach einem der vorangehenden Ansprüche **dadurch gekennzeichnet, dass**
das erste Routenzugelement (1aa) ein Bedienelement (17) aufweist, welches ausgebildet ist, eine Eingabe einer Person (4) zu erhalten, und/oder dass
das zweite Routenzugelement (1ab) ein Bedienelement (17) aufweist, welches ausgebildet ist, eine Eingabe einer Person (4) zu erhalten.

7. Routenzug (1a) nach Anspruch 6, **dadurch gekennzeichnet, dass**
die Routenzug-Master-Steuerungseinheit (50) des ersten Routenzugelements (1aa) ausgebildet ist, zumindest eine Funktion des ersten Routenzugelements (1aa) in Reaktion auf eine Eingabe einer Person (4) mittels des Bedienelements (17) des ersten Routenzugelements (1aa) und/oder mittels des Bedienelements (17) des zweiten Routenzugelements (1ab) zu veranlassen.

8. Routenzug (1a) nach Anspruch 6 oder 7, **dadurch gekennzeichnet, dass**
die Routenzug-Master-Steuerungseinheit (50) des ersten Routenzugelements (1aa) ausgebildet ist, zumindest eine Funktion des zweiten Routenzugelements (1ab) mittels dessen Routenzug-Slave-Steuerungseinheit (51) in Reaktion auf eine Eingabe einer Person (4) mittels des Bedienelements (17) des ersten Routenzugelements (1aa) und/oder mittels des Bedienelements (17) des zweiten Routenzugelements (1ab) zu veranlassen.

9. Routenzug (1a) nach einem der vorangehenden Ansprüche **dadurch gekennzeichnet, dass**
das erste Routenzugelement (1aa) ein Sicherungselement (19) aufweist, welches ausgebildet ist, ein von dem ersten Routenzugelement (1aa) aufgenommenes Logistikelement (2) in der Querrichtung (Y) zu halten,
wobei die Routenzug-Master-Steuerungseinheit (50) des ersten Routenzugelements (1aa) ausgebildet ist, den Halt des aufgenommenen Logistikelements (2) mittels des Sicherungselements (19) des ersten Routenzugelements (1aa) zu bewirken oder aufzuheben, und/oder dass
das zweite Routenzugelement (1ab) ein Sicherungselement (19) aufweist, welches ausgebildet ist, ein von dem zweiten Routenzugelement (1ab) aufgenommenes Logistikelement (2) in der Querrichtung (Y) zu halten,
wobei die Routenzug-Master-Steuerungseinheit (50) des ersten Routenzugelements (1aa) ausgebildet ist, den Halt des aufgenommenen Logistikelements (2) mittels des Sicherungselements (19) des zweiten Routenzugelements (1ab) mittels dessen Routenzug-Slave-Steuerungseinheit (51) zu bewirken oder aufzuheben.

10. Routenzug (1a) nach Anspruch 9, **dadurch gekennzeichnet, dass**
das Sicherungselement (19) des ersten Routenzugelements (1aa) und/oder das Sicherungselement (19) des zweiten Routenzugelements (1ab) ausgebildet ist/sind, durch eine zumindest im Wesentlichen vertikale Bewegung die Beweglichkeit des aufgenommenen Logistikelements (2) in der Querrichtung (Y) freizugeben oder zu blockieren.

11. Routenzug (1a) nach Anspruch 9 oder 10, **dadurch gekennzeichnet, dass**
das erste Routenzugelement (1aa) ein Paar in der Querrichtung (Y) versetzter Sicherungselemente (19) aufweist, welches ausgebildet ist, das aufgenommene Logistikelement (2) in der Querrichtung (Y) beidseitig zu halten, und/oder dass
das zweite Routenzugelement (1ab) ein Paar in der Querrichtung (Y) versetzter Sicherungselemente (19) aufweist, welches ausgebildet ist, ein aufgenommenes Logistikelement (2) in der Querrichtung (Y) beidseitig zu halten.

12. Routenzug (1a) nach einem der vorangehenden Ansprüche **dadurch gekennzeichnet, dass**
das erste Routenzugelement (1aa) ein Anzeigeelement (18) aufweist, welches ausgebildet ist, einer Person (4) wenigstens eine Information anzuzeigen,
wobei die Routenzug-Master-Steuerungseinheit (50) des ersten Routenzugelements (1aa) ausgebildet ist, das Anzeigen des Anzeigeelements (18) des ersten Routenzugelements (1aa) zu veranlassen, und/oder dass
das zweite Routenzugelement (1ab) ein Anzeigeelement (18) aufweist, welches ausgebildet ist, einer Person (4) wenigstens eine Information anzuzeigen,
wobei die Routenzug-Master-Steuerungseinheit (50) des ersten Routenzugelements (1aa) ausgebildet ist, das Anzeigen des Anzeigeelements (18) des zweiten Routenzugelements (1ab) mittels dessen Routenzug-Slave-Steuerungseinheit (51) zu veranlassen.

13. Schleppverbund (1, 3) mit
einem Routenzug (1a) nach einem der vorangehenden Ansprüche und mit
einem Zugfahrzeug (3),
wobei das Zugfahrzeug (3) eine Schleppverbund-Master-Steuerungseinheit (60) aufweist,
wobei die Routenzug-Master-Steuerungseinheit (50) des ersten Routenzugelements (1aa) des Routenzugs (1a) eine Schleppverbund-Slave-Steuerungseinheit (61) dargestellt, und
wobei die Schleppverbund-Master-Steuerungseinheit (60) des Zugfahrzeugs (3) mittels eines Schleppverbund-Busses (62) signalübertragend mit der Schleppverbund-Slave-Steuerungseinheit (61) des ersten Routenzugelements (1aa) des Routenzugs (1a) verbunden ist.

14. Schleppverbund (1, 3) nach Anspruch 13, **dadurch gekennzeichnet, dass**
das Zugfahrzeug (3) ein autonomes Zugfahrzeug (3) ist.

15. Routenzuganordnung (1) oder Schleppverbund (1, 3) mit
einem ersten Routenzug (1a) nach einem der Ansprüche 1 bis 12, und mit
einem weiteren Routenzug (1b), und/oder mit
einem Zugfahrzeug (3),
**dadurch gekennzeichnet, dass**
der erste Routenzug (1aa) (jeweils) mittels einer flexiblen Scherenkopplung (14) mit dem weiteren Routenzug (1b) und/oder mit dem Zugfahrzeug (3) verbunden ist.
